# EUROPÄISCHE PATENTSCHRIFT

(11) **EP 2 279 065 B1**
(45) Veröffentlichungstag und Bekanntmachung des Hinweises auf die Patenterteilung: **06.01.2016**
(21) Anmeldenummer: 09727458.3
(22) Anmeldetag: 01.04.2009
(51) Int. Cl.: F03D 11/04, B28B 11/12, B28B 19/00, B28B 21/02, E04H 12/12, B28B 1/00, B28B 7/22, B28B 11/08, B28B 21/92

(54) **Verfahren zum Errichten eines Windenergieanlagen-Turms**
Method of erecting a wind turbine tower
Procédé pour ériger un tour d'éolienne

(30) Priorität: 01.04.2008 DE 102008016828
(43) Veröffentlichungstag der Anmeldung: 02.02.2011
(73) Patentinhaber: Wobben Properties GmbH, 26607 Aurich (DE)
(72) Erfinder: HÖLSCHER, Norbert, 26607 Aurich (DE)
(74) Vertreter: Eisenführ Speiser
(86) Internationale Anmeldenummer: PCT/EP2009/002374
(87) Internationale Veröffentlichungsnummer: WO 2009/121581

(56) Entgegenhaltungen:
- WO-A2-02/04766
- DE-A1- 10 133 607
- DE-A1- 10 349 155
- JP-A- 2007 321 710

## Beschreibung

Die vorliegende Erfindung betrifft ein Verfahren zum Errichten eines Windenergieanlagen-Turms.

Bei dem Bau von hohen Türmen basierend auf Segmentfertigteilen bzw. Betonfertigteilen kann es aufgrund von Fertigungstoleranzen dazu kommen, dass Betonfertigteile, welche aufeinander gesetzt werden müssen, nicht optimal aufeinander passen.

Um dieses Problem zu vermeiden wird typischerweise eine Ausgleichsschicht, zum Beispiel Mörtel, auf der Baustelle auf eine Stoßfläche bzw. einen Flansch eines Betonfertigteiles aufgebracht, wobei diese Ausgleichsschicht dann auf der Baustelle aushärten muss, d. h. eine vorgegebene Mindestfestigkeit erreichen muss. Ein solches Verfahren ist in WO 02/04766 offenbart. Das erfordert u. a. die Einhaltung meteorologischer Mindestanforderungen, die vom Material der Ausgleichsschicht abhängig sind. Werden diese Mindestanforderungen nicht eingehalten oder wird die Ausgleichsschicht unsachgemäß oder nachlässig aufgebracht, dann besteht die Gefahr von Fehlerstellen oder eines nicht ausreichenden Abbindens etc.

WO 2004/007955 zeigt ein Verfahren zur Herstellung eines Turmsegments einer Windenergieanlage.

DE 101 33 607 A1 zeigt ein Verfahren zur Herstellung eines präzisen Betonfertigteils.

Es ist somit eine Aufgabe der vorliegenden Erfindung, ein Verfahren zum Errichten eines Windenergieanlagen-Turms vorzusehen, welches einen einfacheren und schnelleren Aufbau eines Turmes aus Betonfertigteilen bei gleichbleibend hoher Qualität ermöglicht.

Diese Aufgabe wird durch ein Verfahren gemäß Anspruch 1 gelöst.

Beton wird in eine Gießform mit einem planebenen Boden zum Ausbilden einer planebenen Unterseite gegossen. Sobald der Beton eine vorgegebene Mindestfestigkeit erreicht hat und ein Betonfertigteil mit vorgegebener Mindestfestigkeit erhalten wird, wird eine Ausgleichsschicht auf einer der Unterseite gegenüberliegenden Stoßfläche eines ausgehärteten Betonfertigteiles aufgebracht. Das Betonfertigteil mit vorgegebener Mindestfestigkeit wird auf einer horizontalen Ebene aufgebracht und es erfolgt ein planparalleles Abtragen der Ausgleichsschicht.

Die Betonfertigteile stellen Turmsegmente oder Teile von Turmsegmenten dar.

Gemäß einem Aspekt der vorliegenden Erfindung weist die Ausgleichsschicht Kunstharz auf.

Gemäß einem weiteren Aspekt der vorliegenden Erfindung erfolgt das Abtragen der Ausgleichsschicht durch eine Fräseinheit, welche eine Verstelleinheit zum Verstellen der Fräseinheit in X-, Y- und Z-Richtung aufweist.

Gemäß einem weiteren Aspekt der vorliegenden Erfindung wird eine Mehrzahl von ausgehärteten bzw. eine Mindestfestigkeit aufweisenden Betonfertigteilen mit einer Ausgleichsschicht auf ihrer jeweils der Unterseite gegenüberliegenden Stoßfläche auf einer horizontalen Ebene angeordnet, und die Ausgleichsschichten werden mittels einer Fräseinheit planparallel bearbeitet.

Die Erfindung betrifft den Gedanken, Windenergieanlage-Turmsegment-Betonfertigteile vorzusehen, welche in einer Fabrik vorab gefertigt werden. Hierbei werden die Betonfertigteile planparallel im Werk hergestellt. Hierzu ist die Gießform des Betonfertigteiles (exakt) horizontal angeordnet. Dabei ist der Boden der Gießform (exakt) plan bearbeitet, so dass beim Gießen eine exakt plane Unterseite des Fertigteils entsteht, wenn beispielsweise Beton in die Gießform gefüllt wird und in der Form bleibt, bis er eine vorgegebene Mindestfestigkeit erreicht hat.

Anschließend wird eine Ausgleichsschicht beispielsweise in Form eines Kunstharzes auf die der planen Unterseite gegenüberliegende Seite des Betonfertigteiles aufgebracht. Sobald die Ausgleichsschicht ihrerseits eine vorgegebene Mindestfestigkeit erreicht hat, erfolgt ein planparalleles Abtragen dieser Ausgleichsschicht, so dass diese Seite des Betonfertigteiles planparallel zu der planen Unterseite des Fertigteiles ist. Die Betonfertigteile können dann zu einer Baustelle transportiert werden.

Da die Betonfertigteile die Fabrik bereits mit planparallelen Stoßflächen verlassen, muss keine Nachbehandlung der Betonfertigteile mehr auf der Baustelle erfolgen. Die Betonfertigteile können somit ohne Verzögerung zu einem Turm zusammengesetzt werden. Insbesondere entfällt der Schritt des Auftragens einer Ausgleichsmasse, und dadurch wird neben der Eliminierung möglicher Fehlerquellen auch der Arbeitsablauf auf der Baustelle beschleunigt und in hohem Maße witterungsunabhängig gemacht. Durch das erfindungsgemäße Verfahren kann außerdem eine gleichmäßige Qualität der Betonfertigteile sichergestellt werden, da die vollständige Produktion in der Fabrik unter kontrollierten Bedingungen mit Qualitätssicherung stattfindet. Ferner kann ein Aufbau der Betonfertigteile zu einem Turm schneller erfolgen, da eine Nachbearbeitung bzw. ein Aufbringen einer Ausgleichsschicht auf der Baustelle nicht mehr benötigt wird.

Weitere Ausgestaltungen der Erfindung sind Gegenstand der Unteransprüche.

Ausführungsbeispiele und Vorteile der Erfindung werden nachstehend unter Bezugnahme auf die Zeichnung näher erläutert.
- Fig. 1: zeigt eine schematische, perspektivische Ansicht eines Betonfertigteiles und einer Abtrageinheit gemäß einem ersten Ausführungsbeispiel,
- Fig. 2: zeigt eine perspektivische Ansicht eines Betonfertigteiles und einer Abtrageinheit gemäß dem ersten Ausführungsbeispiel,
- Fig. 3: zeigt eine perspektivische Detailansicht von Fig. 2,
- Fig. 4: zeigt eine weitere perspektivische Ansicht von Betonfertigteilen und der Abtrageinheit gemäß dem ersten Ausführungsbeispiel,
- Fig. 5: zeigt eine perspektivische Ansicht eines Detailausschnitts von Fig. 4,
- Fig. 6: zeigt eine perspektivische Ansicht eines Turms in der Aufbauphase gemäß einem zweiten Ausführungsbeispiel.

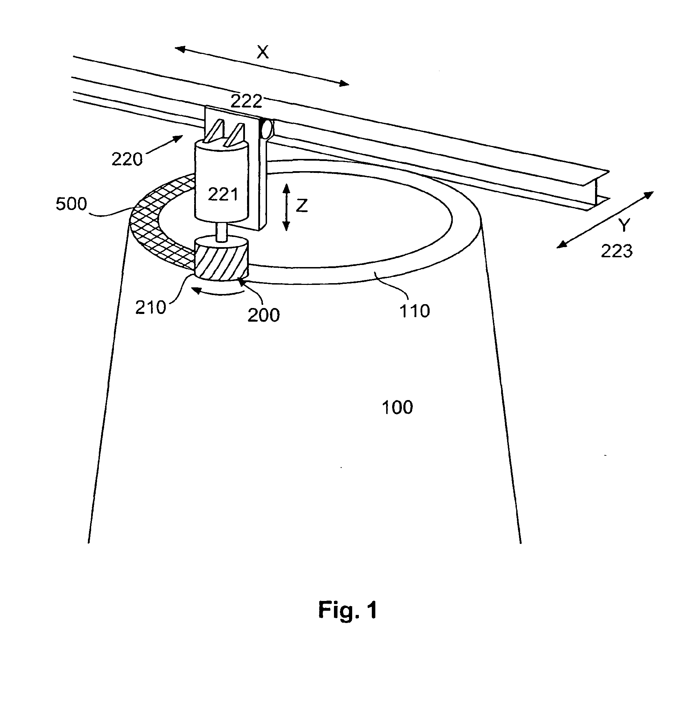

Fig. 1 zeigt eine perspektivische Ansicht eines Betonfertigteiles und einer Abtrageinheit gemäß dem ersten Ausführungsbeispiel. Das Betonfertigteil 100 weist eine Stoßfläche bzw. einen Flansch 110 auf, auf welche eine Ausgleichsschicht 500 aufgebracht ist. Die Abtrageinheit 200 ist gemäß dem ersten Ausführungsbeispiel als eine Fräseinheit mit einem Fräskopf 210 sowie einer Verstelleinheit 220 ausgestaltet. Die Verstelleinheit 220 weist eine Z-Verstelleinheit 221 zur Verstellung in der Z-Richtung, eine X-Verstelleinheit 222 zum Verstellen in der X-Richtung und eine Y-Verstelleinheit 223 zum Verstellen in der Y-Richtung auf. Durch die X-, Y-, und Z-Verstelleinheiten kann der Fräskopf 210 genau gesteuert werden, so dass der Fräskopf 210 die Ausgleichsschicht 500 auf der Stoßfläche bzw. dem Flansch 110 des Betonfertigteiles 100 derart abtragen kann, sobald die Ausgleichsschicht eine für die mechanische Bearbeitung erforderliche Mindestfestigkeit erreicht hat, so dass die Stoßfläche bzw. der Flansch 110 (exakt) planparallel ist.

Die Ausgleichsschicht ist vorzugsweise Kunstharz wie beispielsweise Epoxidharz und wird auf die Stoßfläche 110 des Betonfertigteiles 100 aufgebracht. Nachdem die Ausgleichsschicht eine vorgegebene Mindestfestigkeit erreicht hat, wird diese mittels der Fräseinheit 200 dann planparallel abgetragen. Diese Arbeitsschritte erfolgen vorzugsweise in einer Fabrik unter genau definierten Bedingungen. Somit kann eine genaue Reproduzierbarkeit der gewünschten Qualität sichergestellt werden.

Nach Beendigung des Abtragvorganges kann die Ausgleichsschicht eine Schichtdicke von 1 bis 5 Millimeter aufweisen.

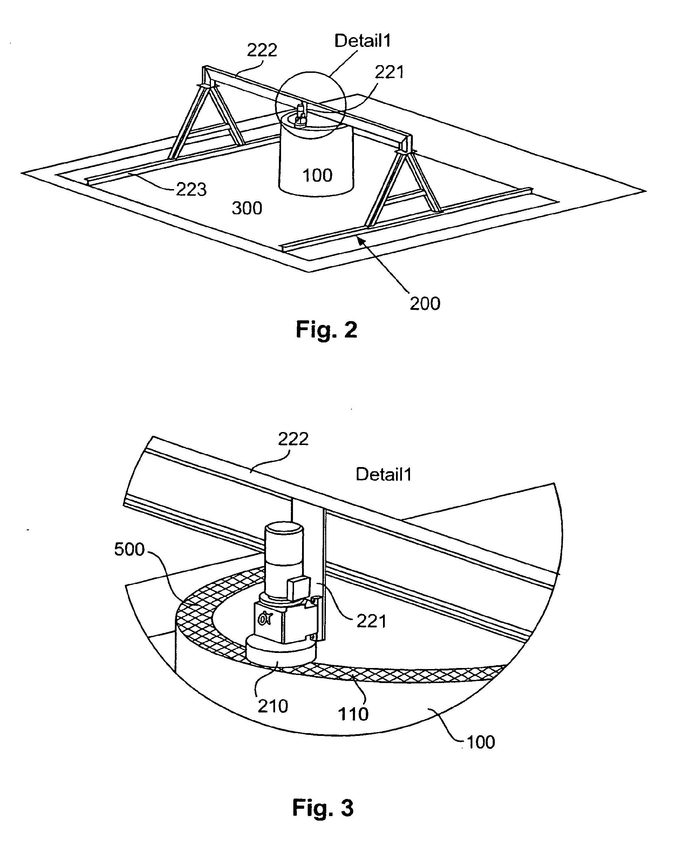

Fig. 2 zeigt eine perspektivische Ansicht eines Betonfertigteiles und einer Abtrageinheit gemäß dem ersten Ausführungsbeispiel. Dabei steht das Betonfertigteil 100 auf einem Boden 300, welcher exakt horizontal ausgerichtet ist. Die Abtrageinheit bzw. die Fräseinheit 200 weist eine X-Verstelleinheit 222, eine Y-Verstelleinheit 223 und eine Z-Verstelleinheit 221 auf. Die Y-Verstelleinheit 223 weist zwei Schienen auf, entlang welcher ein Schlitten der Fräseinheit 200 bewegbar ist. Die X-Verstelleinheit 222 weist eine Schiene auf, die quer zwischen den Schienen der Y-Verstelleinheit 223 verläuft, und entlang welcher der Fräskopf 210 bewegbar ist. Der Fräskopf 210 ist mit der Z-Verstelleinheit 221 gekoppelt, durch welche sich die Fräse in der Z-Richtung, also vertikal einstellen lässt.

Fig. 3 zeigt eine perspektivische Ansicht eines Detailausschnitts von Fig. 2. Hier ist die X-Verstelleinheit 222, die Z-Verstelleinheit 221 und der Fräskopf 210 dargestellt. Der Fräskopf 210 trägt dabei eine Ausgleichsschicht 500 auf ein vorgegebenes Maß ab. Da das Fertigteilsegment auf einem planen Boden steht, führt ein Abtragen der Ausgleichsmasse durch den Fräskopf 210 bei gegenüber dem Boden gleichbleibender Z-Einstellung zu einem planparallelen Flansch bzw. einer planparallelen Stoßfläche, welche sich auf der Oberseite 110 des Betonfertigteiles 100 befindet.

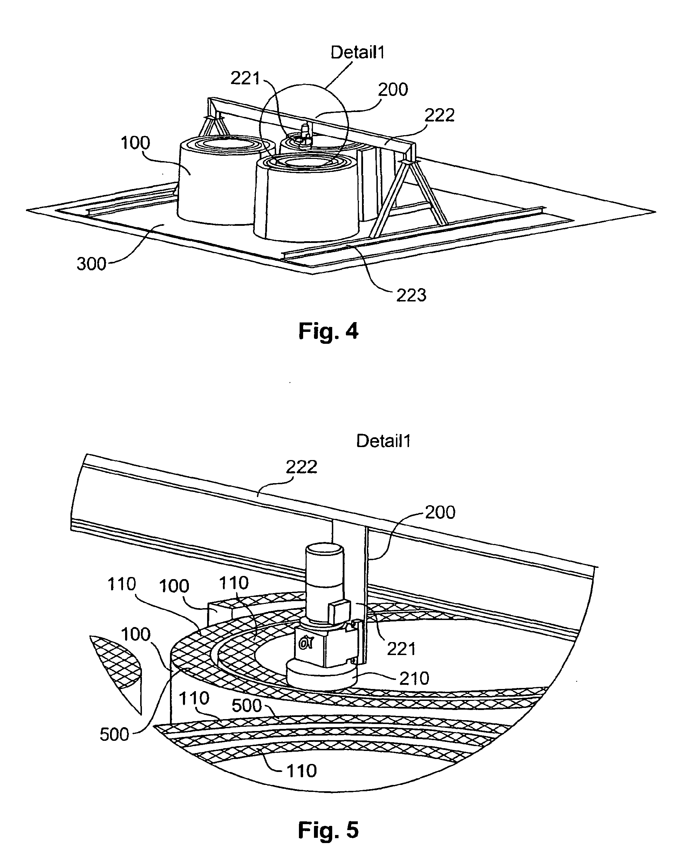

Fig. 4 zeigt eine weitere perspektivische Ansicht einer Vielzahl von Betonfertigteilen und einer Abtrageinheit. In Fig. 4 sind eine Vielzahl von Betonfertigteilen zu sehen, welche teilweise ineinander gestellt worden sind. Dies erlaubt einen rationellen und schnellen Abtragvorgang. Die Betonfertigteile können komplette Segmente oder Teilsegmente darstellen. Durch die (exakt) horizontal ausgerichtete plane Ebene 300 werden alle Fertigteile gleichzeitig planparallel bearbeitet.

Fig. 5 zeigt eine perspektivische Ansicht einer Detailansicht von Fig. 4.

Gemäß dem ersten Ausführungsbeispiel der Erfindung erfolgt ein planparalleles Abtragen der Ausgleichsschicht bereits im Werk. Durch die Gießform, in welche beispielsweise der Beton gegossen wird, kann sichergestellt werden, dass die Unterseite genau planeben ausgestaltet ist. Dies ist eine bevorzugte Vorbedingung für eine planparallele Bearbeitung der gegenüberliegenden Stoßfläche bzw. des gegenüberliegenden Flansches.

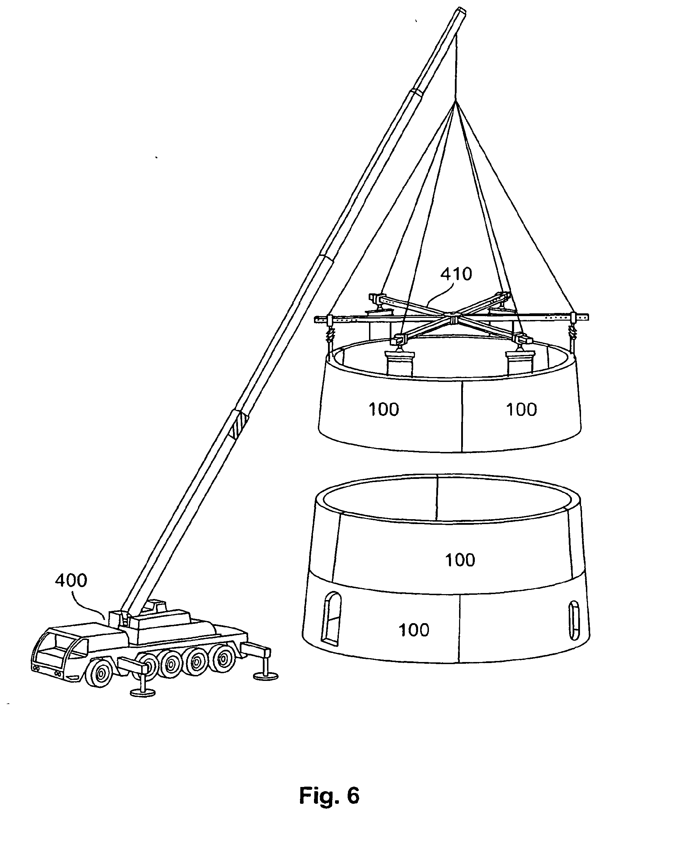

Fig. 6 zeigt eine perspektivische Ansicht eines Aufbaus eines Turms bestehend aus Segmenten gemäß dem zweiten Ausführungsbeispiel. In Fig. 6 ist ein Kran 400 zu sehen, welcher einen Turmschuss, bestehend aus einer Vielzahl von Betonfertigteilen 100, auf zwei bereits platzierten Turmschüssen platziert, welche bereits aufgebaut sind. Hierbei entsprechen die Betonfertigteile 100 gemäß dem zweiten Ausführungsbeispiel den Betonfertigteilen gemäß dem ersten Ausführungsbeispiel.

Damit kann gewährleistet werden, dass eine gleichmäßig hohe Qualität der Betonfertigteile vorhanden ist, wobei der Boden und die Stoßfläche bzw. der Flansch der Betonfertigteile planparallel zueinander sind, so dass keine weitere Ausgleichsschicht auf der Baustelle zwischen zwei Betonfertigteilen vorgesehen werden muss, sondern die Teile exakt aufeinander passend übereinander gesetzt werden können.

Gemäß einem weiteren Ausführungsbeispiel der Erfindung können die Fertigteile in den Boden abgesenkt werden. Dazu kann beispielsweise eine absenkbare bzw. in den Boden absenkbare Hebebühne vorgesehen sein. Dies ist insbesondere vorteilhaft, weil hier keine aufwändige X-, Y- und Z-Verstelleinheit verwendet werden muss. Somit können die Verstelleinheit und die Fräseinheit kleiner ausgestaltet werden. Optional können die Verstelleinheiten und die Fräseinheit verfahrbar ausgestaltet sein, damit die zu fräsenden bzw. gefrästen Fertigteile auf die Hebebühne platziert bzw. von der Hebebühne entfernt werden können.

## Patentansprüche

1. Verfahren zum Errichten eines Windenergieanlagen-Turms aus einer Mehrzahl von Turmsegment-Betonfertigteilen (100) jeweils mit einer unteren und oberen Stoßfläche (110), mit den Schritten:
Herstellen von Windenergieanlagen-Turmsegment-Betonfertigteilen (100) durch:
Gießen von Beton in eine Gießform mit einem planebenen Boden zum Ausbilden eines Betonfertigteils (100) mit einer planebenen unteren Stoßfläche und Abbinden des Betons bis zu einer vorgegebenen Mindestfestigkeit,
**gekennzeichnet durch**
Aufbringen einer Ausgleichsschicht (500) auf die obere Stoßfläche (110) des Betonfertigteiles (100),
Platzieren des Betonfertigteiles (100) mit der planebenen unteren Stoßfläche auf einer exakt horizontal ausgerichteten Ebene (300), und
Abtragen der Ausgleichsschicht (500) auf der oberen Stoßfläche (110) planparallel zur unteren Stoßfläche, so dass die abgetragene Ausgleichsschicht (500) auf der oberen Stoßfläche (110) planeben und parallel zur unteren Stoßfläche ausgebildet ist, und
Anordnen der Mehrzahl von vorab hergestellten Windenergieanlagen-Turmsegment-Betonfertigteilen (100) aufeinander.

2. Verfahren nach Anspruch 1, wobei die Ausgleichsschicht (500) Kunstharz aufweist.

3. Verfahren nach Anspruch 1 oder 2, wobei das Abtragen der Ausgleichsschicht (500) durch eine Fräseinheit (200) erfolgt, welche eine Verstelleinheit (220) zum Verstellen der Fräseinheit in X-, Y- und Z-Richtung aufweist.

4. Verfahren nach einem der Ansprüche 1 bis 3, wobei eine Mehrzahl von Betonfertigteilen (100) mit einer Ausgleichsschicht (500) auf ihrer oberen Stoßfläche (110) auf einer horizontalen Ebene (300) angeordnet werden und die Ausgleichsschichten (500) durch die Fräseinheit (200) planparallel bearbeitet werden.

## Claims

1. Method for erecting a wind turbine tower from a plurality of prefabricated concrete tower segment components (100) which each have a lower and an upper abutment face (110), having the steps of:
producing wind turbine prefabricated concrete tower segment components (100) by means of:
pouring concrete into a casting mould having a level base for forming a prefabricated concrete component (100) with a level lower abutment face and setting the concrete to a predetermined minimum strength,
**characterised by**
applying a compensation layer (500) to the upper abutment face (110) of the prefabricated concrete component (100),
placing the prefabricated concrete component (100) with the level lower abutment face on a plane (300) which is orientated in a precisely horizontal manner, and
removing the compensation layer (500) on the upper abutment face (110) in a plane-parallel manner with respect to the lower abutment face so that the compensation layer (500) which is removed on the upper abutment face (110) is constructed in a level and parallel manner with respect to the lower abutment face, and
arranging the plurality of previously produced wind turbine prefabricated concrete tower segment components (100) one on the other.

2. Method according to claim 1, wherein the compensation layer (500) has synthetic resin.

3. Method according to claim 1 or claim 2, wherein the removal of the compensation layer (500) is carried out by means of a milling unit (200) which has an adjustment unit (220) for adjusting the milling unit in the X, Y and Z direction.

4. Method according to any one of claims 1 to 3, wherein a plurality of prefabricated concrete components (100) with a compensation layer (500) on the upper abutment face (110) thereof are arranged on a horizontal plane (300) and the compensation layers (500) are processed in a plane-parallel manner by means of the milling unit (200).

## Revendications

1. Procédé pour ériger une tour d'éolienne à partir d'une pluralité d'éléments préfabriqués en béton de segment de tour (100) respectivement avec une surface d'about inférieure et supérieure (110), avec les étapes :
la fabrication d'éléments préfabriqués en béton de segment de tour d'éolienne (100) par :
la coulée de béton dans un moule de coulée avec un fond plan pour la réalisation d'un élément préfabriqué en béton (100) avec une surface d'about inférieure plane et la prise du béton jusqu'à une résistance minimale prescrite,
**caractérisé par**
l'application d'une couche de compensation (500) sur la surface d'about supérieure (110) de l'élément préfabriqué en béton (100),
le placement de l'élément préfabriqué en béton (100) avec la surface d'about inférieure plane sur un plan orienté exactement horizontalement (300) et
l'enlèvement de la couche de compensation (500) sur la surface d'about supérieure (110) de manière plane et parallèle à la surface d'about inférieure de sorte que la couche de compensation (500) enlevée sur la surface d'about supérieure (110) soit réalisée de manière plane et parallèle à la surface d'about inférieure et
l'agencement de la pluralité d'éléments préfabriqués en béton de segment de tour d'éolienne (100) préfabriqués les uns sur les autres.

2. Procédé selon la revendication 1, la couche de compensation (500) présentant une résine synthétique.

3. Procédé selon la revendication 1 ou 2, l'enlèvement de la couche de compensation (500) étant effectué par une unité de fraisage (200) qui présente une unité de déplacement (220) pour le déplacement de l'unité de fraisage dans le sens X, Y et Z.

4. Procédé selon l'une quelconque des revendications 1 à 3, une pluralité d'éléments préfabriqués en béton (100) étant agencée avec une couche de compensation (500) sur leur surface d'about supérieure (110) sur un plan horizontal (300) et les couches de compensation (500) étant usinées de manière plane et parallèle par l'unité de fraisage (200).
